# EUROPEAN PATENT APPLICATION

(11) **EP 3 599 255 A1**
(43) Date of publication of application: **29.01.2020**
(21) Application number: 18185060.3
(22) Date of filing: 23.07.2018
(51) Int. Cl.: C08G 18/62, C08G 18/79, C09D 175/04, C08G 18/72, C08G 18/77, C08G 18/78

(54) **IONICALLY HYDROPHILIZED POLYISOCYANATES WITH IMPROVED DRYING**

(71) Applicant: Covestro Deutschland AG, 51373 Leverkusen (DE)
(72) Inventor: The designation of the inventor has not yet been filed
(74) Representative: Levpat

(57) **Abstract**

The invention relates to a polyisocyanate mixture comprising a polyisocyanate component A) having aliphatically and/or cycloaliphatically bonded isocyanate groups and a polyisocyanate component B) having araliphatically and/or aromatically bonded isocyanate groups, characterized in that the polyisocyanate component A) comprises at least 0.85% by weight of sulfonate groups (calculated as SO₃; molar weight = 80 g/mol) in chemically bonded form and the proportion of the polyisocyanate component B) is 7 to 43% by weight of the total amount of the components A) and B). The invention further relates to the use thereof and also coating compositions comprising the polyisocyanate mixture and also the substrates coated with these coating compositions.

## Description

The invention relates to a polyisocyanate mixture and the use of same for producing polyurethane plastics. The invention also relates to coating compositions comprising at least one such polyisocyanate mixture and also the substrates coated with these coating compositions.

Aqueous coating systems are nowadays firmly established for various fields of application as an eco-friendly alternative to solventborne coating compositions. In this case, hydrophilically modified polyisocyanates play a particular role as raw material for qualitatively high-value aqueous coatings since, as water-dispersible crosslinker components, they enable the formulation of aqueous two-component polyurethane (2K-PUR) coatings.

Aqueous 2K-PUR coatings are certainly comparable and sometimes even superior to solventborne coating materials with respect to mechanical and chemical resistance. Their main disadvantage, which prevents further penetration in the market, particularly in wood and furniture coating materials, is their noticeably slower drying behaviour. In the field of solventborne 2K-PUR systems, aromatic or mixed aromatic/aliphatic polyisocyanate crosslinkers are often relied upon to accelerate drying. There has also been no lack of attempts to shorten the drying times of aqueous 2K-PUR coatings by using highly reactive polyisocyanates having aromatic isocyanate groups.

For example, EP-A 0 645 410 describes polyisocyanates based on 2,4- and/or 2,6-diisocyanatotoluene (toluene diisocyanate, TDI) comprising urethane groups hydrophilically modified by reaction with monofunctional polyethylene oxide polyethers and their use as crosslinker components for aqueous 2K-PUR coatings. Aqueous coating systems formulated using these pure aromatic polyisocyanates exhibit the rapid drying required for wood and furniture coatings but an insufficient compatibility with customary commercially available aqueous binders which is why they can generally produce only very dull varnish films. Moreover, the polyisocyanate crosslinkers described in this publication comprise considerable amounts of hydrophilic polyether alcohols which result in permanent hydrophilicity of the coatings and at the same time reduce the hardness.

To improve the compatibility, EP-A 0 680 983 proposed using polyisocyanates or polyisocyanate mixtures, which comprise both TDI and 1,6-diisocyanatohexane (hexamethylene diisocyanate, HDI), instead of the pure aromatic TDI polyisocyanates, in the reaction with polyethylene oxide polyether alcohols. However, these mixed aliphatic-aromatic non-ionic hydrophilized crosslinkers also could not overcome the disadvantages associated with the high polyether content required for adequate emulsifiability, which is why these products also have not been able to prevail in the market.

The subject matter of CN 105949436 is a process for producing hydrophilic HDI/TDI mixed polyisocyanates by reacting TDI/HDI mixtures with polyethylene glycols, catalytic trimerization of the reaction mixture and subsequent reaction with dimethylolpropionic acid and dimethylethanolamine. In this manner, solvent-free, comparatively low-viscosity products having high isocyanate content are obtained which are not low in monomers however and have a completely inadequate storage stability due to the known catalytic effect of the ammonium carboxylate groups intrinsically present.

US 5 652 300 describes faster drying water-dispersible polyisocyanates, produced by reacting specific polyisocyanate mixtures, consisting of diol-modified HDI polyisocyanates and polyisocyanurate polyisocyanates based on 1-isocyanato-3,3,5-trimethyl-5-isocyanatomethylcyclohexane (isophorone diisocyanate, IPDI) or TDI, with non-ionic, hydrophilic surface-active substances, such as methoxypolyethylene glycols for example, and optionally additional hydrophobic NCO-reactive aliphatic compounds or fatty acid ester derivatives. These products also manifest the principal disadvantage of the permanent hydrophilicity, caused by the hydrophilic polyether alcohols, in the form of only low water resistance and comparatively low hardness of the coatings obtained.

To circumvent this principal disadvantage, water emusifiable polyisocyanates have already been developed in recent years which have been hydrophilically modified by incorporating ionic groups, especially sulfonate groups.

According to the teaching of WO 2001/88006, hydrophilized polyisocyanates can be obtained by reacting aliphatic, alicyclic, aromatic or araliphatic polyisocyanates with 2-(cyclohexylamino)ethanesulfonic acid (CHES) or 3-(cyclohexylamino)propanesulfonic acid (CAPS) which, as crosslinkers in aqueous coating systems, result in coatings with high hardness and excellent solvent and chemical resistance. These ionic hydrophilized polyisocyanates can optionally be mixed with further non-hydrophilic polyisocyanates prior to emulsification, wherein the sulfonate-modified proportions of the mixture take on the function of emulsifiers, even for hydrophobic polyisocyanates that are subsequently mixed in.

The same applies to WO 2015/035673, which describes aminopropane-, aminobutane- and/or aminoisobutanesulfonic acids, further substituted by cycloaliphatics on the nitrogen, as hydrophilizing agents for aliphatic, alicyclic, aromatic or araliphatic polyisocyanates. The use of these aminosulfonic acids requires a two-stage preparation process in which initially only a partial amount of a polyisocyanate is reacted and is subsequently mixed with further polyisocyanate.

It was therefore an object of the present invention to provide novel hydrophilically modified polyisocyanates having araliphatic and/or aromatic isocyanate groups, which are suitable as crosslinker components for aqueous binders in numerous different applications and result in particular in a more rapid drying compared to the known water-emulsifiable polyisocyanates of the prior art. The novel polyisocyanates should have long processing times despite their high reactivity and should cure to give clear, as far as possible non-cloudy coating films of high mechanical and chemical resistance.

This object has been achieved, surprisingly, with the provision of the polyisocyanate mixtures, which are described in more detail below.

The present invention is based on the surprising observation that polyisocyanate mixtures, consisting of hydrophilic HDI polyisocyanates with a defined minimum content of sulfonate groups and deficit amounts of araliphatic and/or aromatic polyisocyanates, in combination with customary aqueous coating binders, give rise to coatings which dry significantly more rapidly than those which have been prepared using the polyisocyanates of the prior art, and at the same time are not inferior to these in any way with regard to other coating properties. Particularly surprisingly and by virtue of the known high reactivity of araliphatic and/or aromatic isocyanate groups with respect to water, higher blister-free layer thicknesses can be achieved completely unexpectedly using the polyisocyanate mixtures according to the invention than with the customary commercially available pure aliphatic polyisocyanate crosslinkers.

The present invention provides polyisocyanate mixtures comprising a polyisocyanate component A) having aliphatically and/or cycloaliphatically bonded isocyanate groups and a polyisocyanate component B) having araliphatically and/or aromatically bonded isocyanate groups, characterized in that the polyisocyanate component A) comprises at least 0.85% by weight of sulfonate groups (calculated as SO₃; molar weight = 80 g/mol) in chemically bonded form and the proportion of the polyisocyanate component B) is 7 to 43% by weight of the total amount of the components A) and B).

The invention also provides a process for producing these hydrophilic polyisocyanate mixtures and use thereof as starting components in the production of polyurethane plastics, particularly as crosslinkers for water-soluble or dispersible paint binders or paint binder components having groups that are reactive to isocyanate groups.

Preferably, the expressions "comprising" or "containing" in accordance with the invention mean "consisting essentially of" and particularly preferably "consisting of".

Polyisocyanate components A) for producing the polyisocyanate mixtures according to the invention are any polyisocyanates having aliphatically and/or cycloaliphatically bonded isocyanate groups comprising at least 0.85% by weight, preferably at least 0.90% by weight, more preferably at least 0.95% by weight, even more preferably from 1.00 to 3.00% by weight and most preferably from 1.10 to 1.80% by weight of sulfonate groups (calculated as SO₃; molar weight = 80 g/mol) in chemically bonded form.

Polyisocyanate components A) of this kind comprising sulfonate groups are known. These are preferably reaction products of at least one polyisocyanate C) with at least one organic compound having sulfonic acid and/or sulfonate groups D) bearing at least one group that is reactive to isocyanate groups and optionally non-ionic hydrophilic or hydrophobic compounds E), optionally in the presence of further auxiliaries and additives F).

Suitable polyisocyanates C) for producing polyisocyanate component A) comprising sulfonate groups are any diisocyanates and/or polyisocyanates having aliphatically and/or cycloaliphatically bonded isocyanate groups.

Suitable diisocyanates C) are any diisocyanates accessible in various ways, for example by phosgenation in the liquid or gas phase or by a phosgene-free route, for example by thermal urethane cleavage. Preferred diisocyanates are those from the molecular weight range of 140 to 400 having aliphatically or cycloaliphatically bonded isocyanate groups, examples being 1,4-diisocyanatobutane, 1,5-diisocyanatopentane (pentamethylene diisocyanate, PDI), 1,6-diisocyanatohexane (hexamethylene diisocyanate, HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diisocyanatodecane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H₁₂-MDI), 1-isocyanato-1-methyl-4(3)isocyanatomethylcyclohexane, bis(isocyanatomethyl)norbornane or mixtures of at least two such diisocyanates.

Suitable polyisocyanates C) are any polyisocyanates having uretdione, isocyanurate, allophanate, biuret, iminooxadiazinedione and/or oxadiazinetrione structure, prepared by modification of simple aliphatic and/or cycloaliphatic diisocyanates, for example those of the type mentioned above, as described for example in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299 or by mixtures of at least two such polyisocyanates. In the course of production of these polyisocyanates, the actual modification reaction is generally followed by a further process step for removing the unreacted excess monomeric diisocyanates. The monomers are removed by processes known per se, preferably by thin-film distillation under high vacuum or by extraction with suitable solvents inert to isocyanate groups, for example aliphatic or cycloaliphatic hydrocarbons such as pentane, hexane, heptane, cyclopentane or cyclohexane.

For producing the polyisocyanate component A) comprising sulfonate groups, polyisocyanates of the type mentioned are preferably used as starting component C) having a content of monomeric diisocyanates of less than 1% by weight, preferably less than 0.5% by weight, particularly preferably less than 0.3% by weight. The residual monomer contents are measured according to to DIN EN ISO 10283:2007-11 by gas chromatography with an internal standard.

Particularly preferred polyisocyanates C) for producing the polyisocyanate component A) comprising sulfonate groups are polyisocyanates comprising isocyanurate groups of the type mentioned.

Very particular preference is given to polyisocyanates C) based on PDI, HDI, IPDI and/or 4,4'-diisocyanatodicyclohexylmethane, most preference being given to polyisocyanates C) based on PDI and/or HDI.

The polyisocyanates C) mentioned above as suitable, preferred, particularly preferred and very particularly preferred preferably have an average NCO functionality of 2.3 to 5.0, preferably of 2.5 to 4.5, and a content of isocyanate groups of 6.0 to 26.0% by weight, preferably 8.0 to 25.0% by weight, particularly preferably 10.0 to 24.0% by weight.

Starting compounds D) for producing the polyisocyanate component A) comprising sulfonate groups are any organic compounds bearing at least one group that is reactive to isocyanate groups and at least one sulfonic acid or sulfonate group. These are hydroxy-, mercapto- or amino-functional sulfonic acids and/or salts thereof known per se or are mixtures of at least two such compounds.

Suitable starting compounds D) are, for example, hydroxysulfonic acids of the general formula (I) 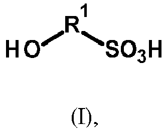 in which R¹ is an alkyl or aryl radical having up to 10 carbon atoms, which may comprise ester groups, carbonyl groups, up to two tertiary amino groups and/or hydroxyl groups, or is a five- or six-membered cycloaliphatic radical, which may optionally comprise nitrogen or oxygen atoms and may also be substituted by further hydroxyl groups.

Examples of suitable hydroxysulfonic acids include: 2-hydroxyethanesulfonic acid, 3-hydroxypropanesulfonic acid, 4-hydroxybutanesulfonic acid, 5-hydroxypentanesulfonic acid, 6-hydroxyhexanesulfonic acid, isomeric phenolsulfonic acids especially 4-hydroxybenzenesulfonic acid, 2-(hydroxymethyl)benzenesulfonic acid, 3,5-bis(hydroxymethyl)benzenesulfonic acid, 4-(2-hydroxyethyl)-1-piperazineethanesulfonic acid (HEPES), 4-(2-hydroxyethyl)-1-piperazinepropanesulfonic acid (HEPPS) and 2-hydroxy-4-morpholinepropanesulfonic acid (MOPSO).

Suitable hydroxysulfonic acids are also specific polyethersulfonic acids, such as are described as detergents, for example, in EP-A 0 592 073, US 3 102 893 and US 2 989 547.

Preferred hydroxysulfonic acids D) for producing the polyisocyanate component A) comprising sulfonate groups are those of the general formula (I), in which R¹ is an alkyl group having up to 6 carbon atoms or an aryl group having 6 to 10 carbon atoms.

Particularly preferred hydroxysulfonic acids D) are 2-hydroxyethanesulfonic acid, 3-hydroxypropanesulfonic acid, 4-hydroxybenzenesulfonic acid and/or 2-(hydroxymethyl)benzenesulfonic acid.

Suitable starting compounds D) are also mercaptosulfonic acids such as 2-mercaptoethanesulfonic acid and 3-mercaptopropane-1-sulfonic acid.

Amino-functional compounds suitable as starting component D) are, for example, substituted aromatic sulfonic acids, which may bear up to three sulfonic acid groups and comprise up to three, preferably up to two, particularly preferably precisely one primary or secondary, preferably precisely one primary amino group, wherein the positions on the aromatic ring in the position ortho to the amino group are unsubstituted.

These are preferably substituted aromatic sulfonic acids of the general formula (II) 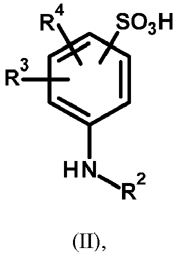 in which R², R³ and R⁴ are each independently identical or different radicals and denote hydrogen or saturated or unsaturated, linear or branched, aliphatic, cycloaliphatic, araliphatic or aromatic organic radicals, which may additionally comprise heteroatoms in the chain, wherein R³ and R⁴ may together also form a ring, preferably a fused aromatic ring, in combination with each other, with the proviso that at least one of the radicals R³ and R⁴ is not hydrogen.

Aliphatic or araliphatic radicals R², R³ and R⁴ in formula (II) are preferably those having 1 to 18 carbon atoms such as, e.g. a methyl, ethyl, propyl, isopropyl, n-butyl, sec-butyl, tert-butyl, pentyl, hexyl, heptyl, octyl, 2-ethylhexyl, 2,4,4-trimethylpentyl, decyl, dodecyl, tetradecyl, hexadecyl, octadecyl, 1,1-dimethylpropyl, 1,1-dimethylbutyl, 1,1,3,3-tetramethylbutyl, benzyl, 1-phenylethyl, 2-phenylethyl, α, α -dimethylbenzyl, benzhydryl, p-tolylmethyl, 1-(p-butylphenyl)ethyl, p-chlorobenzyl, 2,4-dichlorobenzyl, p-methoxybenzyl, m-ethoxybenzyl, 2-cyanoethyl, 2-cyanopropyl, 2-methoxycarbonylethyl, 2-ethoxycarbonylethyl, 2-butoxycarbonylpropyl, 1,2-di(methoxycarbonyl)ethyl, 2-methoxyethyl, 2-ethoxyethyl, 2-butoxyethyl, diethoxymethyl, diethoxyethyl, 1,3-dioxolan-2-yl, 1,3-dioxan-2-yl, 2-methyl-1,3-dioxolan-2-yl, 4-methyl-1,3-dioxolan-2-yl, 2-isopropoxyethyl, 2-butoxypropyl, 2-octyloxyethyl, chloromethyl, 2-chloroethyl, trichloromethyl, trifluoromethyl, 1,1-dimethyl-2-chloroethyl, 2-methoxyisopropyl, butylthiomethyl, 2-dodecylthioethyl, 2-phenylthioethyl, 2,2,2-trifluoroethyl, 2-phenoxyethyl, 2-phenoxypropyl, 3-phenoxypropyl, 4-phenoxybutyl, 6-phenoxyhexyl, 2-methoxyethyl, 2-methoxypropyl, 3-methoxypropyl, 4-methoxybutyl, 6-methoxyhexyl, 2-ethoxypropyl, 3-ethoxypropyl, 4-ethoxybutyl or 6-ethoxyhexyl radical.

Cycloaliphatic radicals R², R³ and R⁴ in formula (II) are preferably those having 5 to 12 carbon atoms such as, e.g. a cyclopentyl, cyclohexyl, cyclooctyl, cyclododecyl, methylcyclopentyl, dimethylcyclopentyl, methylcyclohexyl, dimethylcyclohexyl, diethylcyclohexyl, butylcyclohexyl, methoxycyclohexyl, dimethoxycyclohexyl, diethoxycyclohexyl, butylthiocyclohexyl, chlorocyclohexyl, dichlorocyclohexyl, dichlorocyclopentyl radical and also saturated or unsaturated bicyclic systems such as, e.g. a norbornyl or a norbornenyl radical.

Aromatic radicals R², R³ and R⁴ in formula (II) are preferably those having 6 to 12 carbon atoms such as, e.g. a phenyl, tolyl, xylyl, o-naphthyl, ß-naphthyl, 4-diphenylyl, chlorophenyl, dichlorophenyl, trichlorophenyl, difluorophenyl, methylphenyl, dimethylphenyl, trimethylphenyl, ethylphenyl, diethylphenyl, isopropylphenyl, tert-butylphenyl, dodecylphenyl, methoxyphenyl, dimethoxyphenyl, ethoxyphenyl, hexyloxyphenyl, methylnaphthyl, isopropylnaphthyl, chloronaphthyl, ethoxynaphthyl, 2,6-dimethylphenyl, 2,4,6-trimethylphenyl, 2,6-dimethoxyphenyl, 2,6-dichlorophenyl, 4-bromophenyl, 2- or 4-nitrophenyl, 2,4- or 2,6-dinitrophenyl, 4-dimethylaminophenyl, 4-acetylphenyl, methoxyethylphenyl or ethoxymethylphenyl radical.

If the radicals R³ and R⁴ in formula (II) together form a ring, R³ and R⁴ are preferably a butyl-1,4-ylene chain or particularly preferably a 1,3-butadien-1,4-ylene chain, which means that the aromatic sulfonic acids in this case preferably have a tetrahydronaphthalene or particularly preferably a naphthalene structure.

The radical R² is particularly preferably hydrogen, a methyl, ethyl, n-propyl, isopropyl, tert-butyl, cyclopentyl or cyclohexyl radical, especially preferably hydrogen.

The radicals R³ and R⁴ are particularly preferably each independently hydrogen, a methyl, ethyl, isopropyl, tert-butyl, hexyl, octyl, nonyl, decyl, dodecyl, phenyl or naphthyl radical, especially preferably hydrogen and/or a methyl group. In this case, preferably one of the radicals R4 and R5 is hydrogen while the other is other than hydrogen.

The sulfonic acid group in formula (II), as well as the substituents R³ and R⁴, is in the para- or meta-position on the aromatic ring based on the primary or secondary amino group, the sulfonic acid group preferably in this case being in the meta-position.

Suitable aromatic aminosulfonic acids of the general formula (II) are, for example, 4-aminotoluene-2-sulfonic acid, 5-aminotoluene-2-sulfonic acid or 2-aminonaphthalene-4-sulfonic acid, particular preference being given to 4-aminotoluene-2-sulfonic acid.

Further starting compounds D) for producing the polyisocyanate component A) comprising sulfonate groups are finally also amino-functional sulfonic acids of the general formula (III) 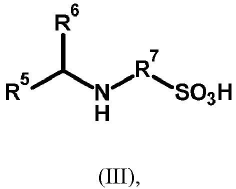 in which R⁵ and R⁶ are each independently identical or different radicals and are hydrogen or saturated or unsaturated, linear or branched, aliphatic or cycloaliphatic or aromatic organic radicals having 1 to 18 carbon atoms, which are substituted or unsubstituted and/or comprise heteroatoms in the chain, wherein R⁵ and R⁶, in combination with each other and optionally one further nitrogen atom or one oxygen atom, may form cycloaliphatic or heterocyclic rings having 3 to 8 carbon atoms, which may optionally be further substituted, and R⁷ is a linear or branched aliphatic radical having 2 to 6 carbon atoms.

In the general formula (III), R⁵ and R⁶ are each independently preferably saturated, linear or branched, aliphatic or cycloaliphatic organic radicals having 1 to 8 carbon atoms, which may also form cycloaliphatic rings in combination with each other, and R⁷ is a linear or branched aliphatic radical having 2 to 4 carbon atoms.

Suitable aminosulfonic acids of the general formula (III) are, for example, 2-aminoethanesulfonic acid, 3-aminopropane-1-sulfonic acid, 4-aminobutane-1-sulfonic acid, 3-aminobutane-1-sulfonic acid, 3-amino-2-methylpropane-1-sulfonic acid, 4-aminobutane-2-sulfonic acid, 2-methylaminoethane-1-sulfonic acid, 2-ethylaminoethane-1-sulfonic acid, 2-propylaminoethane-1-sulfonic acid, 2-isopropylaminoethane-1-sulfonic acid, 2-n-butylaminoethane-1-sulfonic acid, 2-(tert-butyl)aminoethane-1-sulfonic acid, 2-pentylaminoethane-1-sulfonic acid, 2-hexylaminoethane-1-sulfonic acid, 2-octylaminoethane-1-sulfonic acid, 2-anilinoethane-1-sulfonic acid, 2-cyclopropylaminoethane-1-sulfonic acid, 2-cyclobutylaminoethane-1-sulfonic acid, 2-cyclopentylaminoethane-1-sulfonic acid, 2-cyclohexylaminoethane-1-sulfonic acid, the isomeric 2-(methylcyclohexyl)aminoethane-1-sulfonic acids, 2-(2,3-dimethylcyclohexyl)aminoethane-1-sulfonic acid, 2-(3,3,5-trimethylcyclohexylaminoethane-1-sulfonic acid, 2-(4-tert-butylcyclohexyl)aminoethane-1-sulfonic acid, 2-cycloheptylaminoethane-1-sulfonic acid, 2-cyclooctylaminoethane-1-sulfonic acid, 2-(2-norbornyl)aminoethane-1-sulfonic acid, 2-(1-adamantyl)aminoethane-1-sulfonic acid, 2-(3,5-dimethyl-1-adamantyl)aminoethane-1-sulfonic acid, 3-methylaminopropane-1-sulfonic acid, 3-ethylaminopropane-1-sulfonic acid, 3-propylaminopropane-1-sulfonic acid, 3-isopropylaminopropane-1-sulfonic acid, 3-n-butylaminopropane-1-sulfonic acid, 3-(tert-butyl)aminopropane-1-sulfonic acid, 3-pentylaminopropane-1-sulfonic acid, 3-hexylaminopropane-1-sulfonic acid, 3-octylaminopropane-1-sulfonic acid, 3-anilinopropane-1-sulfonic acid, 3-cyclopropylaminopropane-1-sulfonic acid, 3-cyclobutylaminopropane-1-sulfonic acid, 3-cyclopentylaminopropane-1-sulfonic acid, 3-cyclohexylaminopropane-1-sulfonic acid, the isomeric 3-(methylcyclohexyl)aminopropane-1-sulfonic acids, 3-(2,3-dimethylcyclohexyl)aminopropane-1-sulfonic acid, 3-(3,3,5-trimethylcyclohexylaminopropane-1-sulfonic acid, 3-(4-tert-butylcyclohexyl)aminopropane-1-sulfonic acid, 3-cycloheptylaminopropane-1-sulfonic acid, 3-cyclooctylaminopropane-1-sulfonic acid, 3-(2-norbornyl)aminopropane-1-sulfonic acid, 3-(1-adamantyl)aminopropane-1-sulfonic acid, 3-(3,5-dimethyl-1-adamantyl)aminopropane-1-sulfonic acid, 3-methylaminobutane-1-sulfonic acid, 3-ethylaminobutane-1-sulfonic acid, 3-propylaminobutane-1-sulfonic acid, 3-isopropylaminobutane-1-sulfonic acid, 3-n-butylaminobutane-1-sulfonic acid, 3-(tert-butyl)aminobutane-1-sulfonic acid, 3-pentylaminobutane-1-sulfonic acid, 3-hexylaminobutane-1-sulfonic acid, 3-octylaminobutane-1-sulfonic acid, 3-anilinobutane-1-sulfonic acid, 3-cyclopropylaminobutane-1-sulfonic acid, 3-cyclobutylaminobutane-1-sulfonic acid, 3-cyclopentylaminobutane-1-sulfonic acid, 3-cyclohexylaminobutane-1-sulfonic acid, the isomeric 3-(methylcyclohexyl)aminobutane-1-sulfonic acids, 3-(2,3-dimethylcyclohexyl)aminobutane-1-sulfonic acid, 3-(3,3,5-trimethylcyclohexylaminobutane-1-sulfonic acid, 3-(4-tert-butylcyclohexyl)aminobutane-1-sulfonic acid, 3-cycloheptylaminobutane-1-sulfonic acid, 3-cyclooctylaminobutane-1-sulfonic acid, 3-(2-norbornyl)aminobutane-1-sulfonic acid, 3-(1-adamantyl)aminobutane-1-sulfonic acid, 3-(3,5-dimethyl-1-adamantyl)aminobutane-1-sulfonic acid, 4-methylaminobutane-1-sulfonic acid, 4-ethylaminobutane-1-sulfonic acid, 4-propylaminobutane-1-sulfonic acid, 4-isopropylaminobutane-1-sulfonic acid, 4-n-butylaminobutane-1-sulfonic acid, 4-(tert-butyl)aminobutane-1-sulfonic acid, 4-pentylaminobutane-1-sulfonic acid, 4-hexylaminobutane-1-sulfonic acid, 4-octylaminobutane-1-sulfonic acid, 4-anilinobutane-1-sulfonic acid, 4-cyclopropylaminobutane-1-sulfonic acid, 4-cyclobutylaminobutane-1-sulfonic acid, 4-cyclopentylaminobutane-1-sulfonic acid, 4-cyclohexylaminobutane-1-sulfonic acid, the isomeric 4-(methylcyclohexyl)aminobutane-1-sulfonic acids, 4-(2,3-dimethylcyclohexyl)aminobutane-1-sulfonic acid, 4-(3,3,5-trimethylcyclohexylaminobutane-1-sulfonic acid, 4-(4-tert-butylcyclohexyl)aminobutane-1-sulfonic acid, 4-cycloheptylaminobutane-1-sulfonic acid, 4-cyclooctylaminobutane-1-sulfonic acid, 4-(2-norbornyl)aminobutane-1-sulfonic acid, 4-(1-adamantyl)aminobutane-1-sulfonic acid, 4-(3,5-dimethyl-1-adamantyl)aminobutane-1-sulfonic acid, 3-methylamino-2-methylpropane-1-sulfonic acid, 3-ethylamino-2-methylpropane-1-sulfonic acid, 3-propylamino-2-methylpropane-1-sulfonic acid, 3-isopropylamino-2-methylpropane-1-sulfonic acid, 3-n-butylamino-2-methylpropane-1-sulfonic acid, 3-(tert-butyl)amino-2-methylpropane-1-sulfonic acid, 3-pentylamino-2-methylpropane-1-sulfonic acid, 3-hexylamino-2-methylpropane-1-sulfonic acid, 3-octylamino-2-methylpropane-1-sulfonic acid, 3-anilino-2-methylpropane-1-sulfonic acid, 3-cyclopropylamino-2-methylpropane-1-sulfonic acid, 3-cyclobutylamino-2-methylpropane-1-sulfonic acid, 3-cyclopentylamino-2-methylpropane-1-sulfonic acid, 3-cyclohexylamino-2-methylpropane-1-sulfonic acid, the isomeric 3-(methylcyclohexyl)amino-2-methylpropane-1-sulfonic acids, 3-(2,3-dimethylcyclohexyl)amino-2-methylpropane-1-sulfonic acid, 3-(3,3,5-trimethylcyclohexylamino-2-methylpropane-1-sulfonic acid, 3-(4-tert-butylcyclohexyl)amino-2-methylpropane-1-sulfonic acid, 3-cycloheptylamino-2-methylpropane-1-sulfonic acid, 3-cyclooctylamino-2-methylpropane-1-sulfonic acid, 3-(2-norbornyl)amino-2-methylpropane-1-sulfonic acid, 3-(1-adamantyl)amino-2-methylpropane-1-sulfonic acid, 3-(3,5-dimethyl-1-adamantyl)amino-2-methylpropane-1-sulfonic acid, 3-methylaminobutane-2-sulfonic acid, 3-ethylaminobutane-2-sulfonic acid, 3-propylaminobutane-2-sulfonic acid, 3-isopropylaminobutane-2-sulfonic acid, 3-n-butylaminobutane-2-sulfonic acid, 3-(tert-butyl)aminobutane-2-sulfonic acid, 3-pentylaminobutane-2-sulfonic acid, 3-hexylaminobutane-2-sulfonic acid, 3-octylaminobutane-2-sulfonic acid, 3-anilinobutane-2-sulfonic acid, 3-cyclopropylaminobutane-2-sulfonic acid, 3-cyclobutylaminobutane-2-sulfonic acid, 3-cyclopentylaminobutane-2-sulfonic acid, 3-cyclohexylaminobutane-2-sulfonic acid, the isomeric 3-(methylcyclohexyl)aminobutane-2-sulfonic acids, 3-(2,3-dimethylcyclohexyl)aminobutane-2-sulfonic acid, 3-(3,3,5-trimethylcyclohexylaminobutane-2-sulfonic acid, 3-(4-tert-butylcyclohexyl)aminobutane-2-sulfonic acid, 3-cycloheptylaminobutane-2-sulfonic acid, 3-cyclooctylaminobutane-2-sulfonic acid, 3-(2-norbornyl)aminobutane-2-sulfonic acid, 3-(1-adamantyl)amino-2-sulfonic acid and 3-(3,5-dimethyl-1-adamantyl)aminobutane-2-sulfonic acid.

Particularly preferred aminosulfonic acids D) for producing polyisocyanate component A) comprising sulfonate groups are those of the general formula (III), in which neither of the radicals R⁵ and R⁶ are hydrogen.

Very particularly preferred aminosulfonic acids D) are 2-isopropylaminoethane-1-sulfonic acid, 3-isopropylaminopropane-1-sulfonic acid, 4-isopropylaminobutane-1-sulfonic acid, 2-cyclohexylaminoethane-1-sulfonic acid, 3-cyclohexylaminopropane-1-sulfonic acid and 4-cyclohexylaminobutane-1-sulfonic acid.

To produce the polyisocyanate component A) comprising sulfonate groups, the polyisocyanates C) are reacted with at least one sulfonic acid D) bearing at least one group that is reactive to isocyanate groups in amounts such that the resulting polyisocyanate component A) comprises at least 0.85% by weight, preferably at least 0.90% by weight, more preferably at least 0.95% by weight, even more preferably from 1.00 to 3.00% by weight and most preferably from 1.10 to 1.80% by weight of sulfonate groups (calculated as SO₃; molar weight = 80 g/mol) in chemically bound form.

To produce the polyisocyanate component A) comprising sulfonate groups, the sulfonic acids D) bearing at least one group that is reactive to isocyanate groups are at least partially neutralized before, during or after the reaction with the polyisocyanate component C) and in this manner are converted to sulfonate groups.

Suitable neutralizing agents in this case are any bases, such as alkali metal hydroxides or alkaline earth metal hydroxides, but preferably amines, especially tertiary monoamines such as, for example, trimethylamine, triethylamine, the isomeric tripropyl- and tributylamines, N,N-dimethylethylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-diethylmethylamine, N,N-diethylpropylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-diisopropylbutylamine, N,N-diisopropyl-2-ethylhexylamine, N,N-dioctylmethylamine, N,N-dimethylallylamine, N,N-dimethylbenzylamine, N,N-diethylbenzylamine, N,N-dibenzylmethylamine, tribenzylamine, N,N-dimethyl-4-methylbenzylamine, N,N-dimethylcyclohexylamine, N,N-diethylcyclohexylamine, N,N-dicyclohexylmethylamine, N,N-dicyclohexylethylamine, tricyclohexylamine, N-methylpyrrolidine, N-ethylpyrrolidine, N-propylpyrrolidine, N-butylpyrrolidine, N-methylpiperidine, N-ethylpiperidine, N-propylpiperidine, N-butylpiperidine, N-methylmorpholine, N-ethylmorpholine, N-propylmorpholine, N-butylmorpholine, N-sec-butylmorpholine, N-tert-butylmorpholine, N-isobutylmorpholine and quinuclidine or tertiary diamines such as, for example, 1,3-bis(dimethylamino)propane, 1,4-bis(dimethylamino)butane and N,N'-dimethylpiperazine, or mixtures of at least two such tertiary amines.

Suitable but less preferred neutralizing amines are also additionally tertiary amines bearing groups that are reactive to isocyanate groups, for example alkanolamines such as dimethylethanolamine, methyldiethanolamine or triethanolamine.

Preferred neutralizing amines for the sulfonic acids D) are N,N-dimethylbutylamine, N,N-dimethyl-2-ethylhexylamine, N,N-diethylmethylamine, N,N-diisopropylethylamine, N,N-diisopropyl-2-ethylhexylamine, N,N-dimethylcyclohexylamine, N,N-dicyclohexylmethylamine, N-methylpyrrolidine, N-methylpiperidine, N-ethylpiperidine, N-methylmorpholine, N-ethylmorpholine, N-isobutylmorpholine or mixtures thereof.

Particular preference is given to N,N-dimethylbutylamine, N,N-diethylmethylamine, N,N-diisopropylethylamine, N,N-dimethylcyclohexylamine, N-methylpiperidine, N-ethylmorpholine or mixtures thereof.

The neutralizing agents specified for producing the polyisocyanate component A) comprising sulfonate groups are added in such amounts that the sulfonic acid groups of the starting compounds D) in the resulting method products according to the invention are neutralized to an extent of at least 20 mol%, preferably to an extent of at least 50 mol%, particularly preferably to an extent of at least 90 mol% and especially preferably completely neutralized and are present in the form of sulfonate groups.

Starting compounds E) for producing the polyisocyanate component A) comprising sulfonate groups are any non-ionic hydrophilic or hydrophobic compounds which comprise at least one group that is reactive to isocyanates.

Suitable non-ionic hydrophilic compounds E) are, for example, monohydric or polyhydric polyalkylene oxide polyether alcohols having a statistical average of 5 to 50 ethylene oxide units per molecule, as obtainable in a manner known per se by alkoxylation of suitable starter molecules (for example see Ullmanns Encyclopädie der technischen Chemie, 4th edition, volume 19, Verlag Chemie, Weinheim pp. 31-38). Starter molecules of this kind may be, for example, mono- or polyhydric alcohols of the molecular weight range 32 to 300, such as methanol, ethanol, n-propanol, isopropanol, n-butanol, isobutanol, sec-butanol, the isomeric pentanols, hexanols, octanols and nonanols, n-decanol, n-dodecanol, n-tetradecanol, n-hexadecanol, n-octadecanol, cyclohexanol, the isomeric methylcyclohexanols, hydroxymethylcyclohexane, 3-methyl-3-hydroxymethyloxetane, benzyl alcohol, phenol, the isomeric cresols, octylphenols, nonylphenols and naphthols, furfuryl alcohol, tetrahydrofurfuryl alcohol, 1,2-ethanediol, 1,2- and 1,3-propanediol, the isomeric butanediols, pentanediols, hexanediols, heptanediols and octanediols, 1,2- and 1,4-cyclohexanediol, 1,4-cyclohexanedimethanol, 4,4'-(1-methylethylidene)biscyclohexanol, 1,2,3-propanetriol, 1,1,1-trimethylolethane, 1,2,6-hexanetriol, 1,1,1-trimethylolpropane, 2,2-bis(hydroxymethyl)-1,3-propanediol or 1,3,5-tris(2-hydroxyethyl)isocyanurate.

Alkylene oxides suitable for the alkoxylation reaction are especially ethylene oxide and propylene oxide, which can be used in the alkoxylation reaction in any sequence or else in a mixture. Suitable polyether alcohols are either pure polyethylene oxide polyether alcohols or mixed polyalkylene oxide polyethers, the alkylene oxide units of which consist to an extent of at least 70 mol%, preferably to an extent of at least 80 mol%, of ethylene oxide units.

Preferred polyalkylene oxide polyether alcohols E) are those which have been produced using the aformentioned monoalcohols of the molecular weight range 32 to 150 as starter molecules. Particularly preferred polyether alcohols are pure polyethylene glycol monomethyl ether alcohols having a statistical average of 5 to 50, especially preferably 5 to 25 ethylene oxide units.

Non-ionic hydrophilic compounds E) for producing the polyisocyanate component A) comprising sulfonate groups are used, if at all, in amounts to an extent of up to 30% by weight, preferably up to 25% by weight, more preferably up to 20% by weight and most preferably up to 15% by weight based on the starting polyisocyanate C).

Suitable hydrophobic compounds E) are, for example, aliphatic alcohols or fatty acid ester alcohols having in each case at least 8 carbon atoms.

Suitable aliphatic hydrophobic alcohols are, for example, 1-octanol, 2-ethyl-1-hexanol, the isomeric nonanols, decanols, undecanols, dodecanols, tridecanols, tetradecanols, pentadecanols, hexadecanols and 3-phenyl-2-propenol (cinnamyl alcohol) and also hydrophobic polyalkylene oxide alcohols started by these alcohols, the alkylene oxide units of which consist to an extent of at least 80 mol%, preferably at least 90 mol%, particularly preferably exclusively of propylene oxide units.

Suitable fatty acid ester alcohols E) are, for example, esterification products of hydroxy-functional fatty acids, such as hydroxyacetic acid, 3-hydroxypropionic acid, 3- and 4-hydroxybutyric acid, 2-hydroxysuccinic acid (malic acid), 2,3-dihydroxysuccinic acid (tartaric acid), 2-hydroxy-1,2,3-propanetricarboxylic acid (citric acid), hydroxystearic acid, ricinoleic acid, salicylic acid and mandelic acid, with alcohols such as methanol, ethanol, n-propanol, isopropanol, n-butanol, isobutanol, sec-butanol, the isomeric pentanols, hexanols, octanols and nonanols, n-decanol or n-dodecanol, in which the sum total of carbon atoms of the fatty acid and esterification alcohol is at least 8.

Hydrophobic compounds E) for producing the polyisocyanate component A) comprising sulfonate groups are used, if at all, in amounts to an extent of up to 30% by weight, preferably up to 20% by weight, particularly preferably up to 10% by weight, based on the starting polyisocyanate C).

In the production of the polyisocyanate component A) comprising sulfonate groups, optionally further auxiliaries and additives F) such as antioxidants and/or catalysts may also be used.

Suitable antioxidants F) are, for example, compounds having antioxidative effect known per se from plastics chemistry such as preferred sterically hindered phenols and/or di- or trisubstituted phosphites.

Suitable sterically hindered phenols F) are, for example, 2,6-di-tert-butylphenol, 2,4-dimethyl-6-tert-butylphenol, 2,6-di-tert-butyl-4-methylphenol, triethylene glycol bis(3-tert-butyl-4-hydroxy-5-methylphenyl)propionate, octadecyl 3-(3,5-di-tert-butyl-4-hydroxyphenyl)propionate, pentaerythritol tetrakis(3-(3,5-di-tert-butyl-4-hydroxyphenyl)propionate), esters of 3-(3,5-di-tert-butyl-4-hydroxyphenyl)propionic acid with aliphatic branched C7- to C9-alcohols such as isoheptyl 3-(3,5-di-tert-butyl-4-hydroxyphenyl)propionate, isooctyl 3-(3,5-di-tert-butyl-4-hydroxyphenyl)propionate or isononyl 3-(3,5-di-tert-butyl-4-hydroxyphenylpropionate, isotridecyl 3-(3,5-di-tert-butyl-4-hydroxyphenyl)propionate, thiodiethyl bis[3-(3,5-di-tert-butyl-4-hydroxyphenyl)propionate], N,N'-hexamethylenebis(3,5-di-tert-butyl-4-hydroxyphenyl)propionamide, 1,2-bis(3,5-di-tert-butyl-4-hydroxyphenylpropionic acid)hydrazide, 2,4-di-tert-butylphenyl 4'-hydroxy-3',5'-di-tert-butylbenzoate, esters of (3,5-di-tert-butyl-4-hydroxyphenyl)methylthioacetic acid with aliphatic branched C10- to C14-alcohols, 2,2'-thiobis(4-methyl-6-tert-butylphenol), 2-methyl-4,6-bis(octylthiomethyl)phenol, 1,3,5-trimethyl-2,4,6-tris(3,5-di-tert-butyl-4-hydroxybenzyl)benzene, tris(3,5-di-tert-butyl-4-hydroxybenzyl)isocyanurate and 2,5-di-tert-amylhydroquinone, which are optionally used in combination with didodecyl 3,3'-thiodipropionate or dioctadecyl 3,3'-thiodipropionate.

Suitable phosphites F) are, for example, di- or preferably trisubstituted phosphites such as dibutyl phosphite and dibenzyl phosphite, triethyl phosphite and tributyl phosphite. The antioxidants F) of the phosphite type are preferably trisubstituted phosphites in which at least one of the substituents is an optionally substituted aromatic radical having 6 to 18 carbon atoms or a linear or branched aliphatic radical having 9 to 18 carbon atoms, for example aryl phosphites such as triphenyl phosphite, tris(2,4-di-tert-butylphenyl) phosphite or tris(nonylphenyl) phosphite, alkyl-aryl phosphites such as diphenylisooctyl phosphite, diphenylisodecyl phosphite, diisodecylphenyl phosphite, diisooctylphenyl phosphite, phenyl neopentyl glycol phosphite or 2,4,6-tri-tert-butylphenyl(2-butyl-2-ethyl-1,3-propanediol) phosphite, alkyl phosphites such as triisodecyl phosphite, trilauryl phosphite or tris(tridecyl) phosphite, or aromatic or aliphatic substituted diphosphites such as diisodecyl pentaerythritol diphosphite, distearyl pentaerythritol diphosphite, bis(2,4-di-tert.-butylphenyl) pentaerythritol diphosphite or tetraphenyl dipropylene glycol diphosphite.

Preferred antioxidants F) for producing the polyisocyanate component A) comprising sulfonate groups are sterically hindered phenols comprising 2,6-di-tert-butyl-4-methylphenol structures, and also trisubstituted phosphites bearing at least one linear or branched aliphatic substituent having 10 to 16 carbon atoms or a phenyl radical. Particularly preferred antioxidants F) are 2,6-di-tert-butyl-4-methylphenol, esters of 3-(3,5-di-tert-butyl-4-hydroxyphenyl)propionic acid with aliphatic branched C7- to C9-alcohols, octadecyl 3-(3,5-di-tert-butyl-4-hydroxyphenyl)propionate, triisodecyl phosphite, phenyldiisodecyl phospite and/or diphenylisodecyl phospite.

Very particularly preferred antioxidants F) for producing the polyisocyanate component A) comprising sulfonate groups are 2,6-di-tert-butyl-4-methylphenol and esters of 3-(3,5-di-tert-butyl-4-hydroxyphenyl)propionic acid with aliphatic branched C7- to C9-alcohols.

In the production of the polyisocyanate component A) comprising sulfonate groups, antioxidants F) are used, if at all, both singly and in any desired combinations with one another in amounts of 0.001 to 3.0 % by weight, preferably 0.002 to 2.0% by weight, particularly preferably 0.005 to 1.0% by weight, especially preferably 0.01 to 0.5% by weight, calculated as the total amount of antioxidants used, based on the amount of polyisocyanate C).

The antioxidants F) in this case may be added in the amount specified above to one or more of the reaction partners, to the polyisocyanate C), to the sulfonic acids D) bearing at least one group that is reactive to isocyanate groups and/or to the non-ionic hydrophilic or hydrophobic compounds E) optionally to be used, already before the start of the actual reaction. However, they can also be added to the reaction mixture at any desired time point during the metered addition of the reaction partners or thereafter, preferably at the start of the metered addition.

The antioxidant F) is added to the polyisocyanate C), if at all, before the start of the reaction.

The reaction of the components C), D) and optionally E), in the production of the polyisocyanate component A) comprising sulfonate groups, generally proceeds sufficiently rapidly but, to accelerate the reaction, customary catalysts known from polyurethane chemistry may also optionally be used as further auxiliaries and additives F), for example further tert amines such as triethylamine, pyridine, methylpyridine, benzyldimethylamine, N,N-endoethylene piperazine, N-methylpiperidine, pentamethyldiethylenetriamine, N,N-dimethylaminocyclohexane, N,N'-dimethylpiperazine or metal salts such as iron(III) chloride, aluminium tri(ethylacetoacetate), zinc chloride, zinc(II) n-octanoate, zinc(II) 2-ethyl-1-hexanoate, zinc(II) 2-ethylcaproate, zinc(II) stearate, zinc(II) naphthenate, zinc(II) acetylacetonate, tin(II) n-octanoate, tin(II) 2-ethyl-1-hexanoate, tin(II) ethylcaproate, tin(II) laurate, tin(II) palmitate, dibutyltin(IV) oxide, dibutyltin(IV) dichloride, dibutyltin(IV) diacetate, dibutyltin(IV) dimaleate, dibutyltin(IV) dilaurate, dioctyltin(IV) diacetate, molybdenum glycolate or mixtures of at least two such catalysts.

These catalysts F) are used in the production of the polyisocyanate component A) comprising sulfonate groups, if at all, in an amount of 0.001 to 2% by weight, preferably 0.005 to 0.5% by weight, based on the total weight of the reaction partners.

Suitable polyisocyanate components B) for producing the polyisocyanate mixtures according to the invention are any diisocyanates, triisocyanates and/or polyisocyanates having araliphatically and/or aromatically bonded isocyanate groups. In the context of the present invention, araliphatically bonded isocyanate groups are understood to mean isocyanate groups which are bonded to an aromatic ring via an optionally branched alkylene radical, preferably a methylene radical, whereas aromatically bonded isocyanate groups are understood to mean those bonded directly to an aromatic ring.

Suitable diisocyanates and triisocyanates B) are any araliphatic and/or aromatic diisocyanates and triisocyanates accessible in various ways, for example by phosgenation in the liquid or gas phase or by a phosgene-free route, for example by thermal urethane cleavage, preferably those of the molecular weight range from 160 to 600, such as 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,3-bis(isocyanatomethyl)-4-chlorobenzene, 1,3-bis(isocyanatomethyl)-4,5-dichlorobenzene, 1,3-bis(isocyanatomethyl)-2,4,5,6-tetrachlorobenzene, 1,4-bis(isocyanatomethyl)-2,3,5,6-tetrachlorobenzene, 1,4-bis(isocyanatomethyl)-2,3,5,6-tetrabromobenzene, 1,4-bis(2-isocyanatoethyl)benzene and 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, the isomeric diethylphenylene diisocyanates, diisopropylphenylene diisocyanates, diisododecylphenylene diisocyanates and biphenyl diisocyanates, 3,3'-dimethoxybiphenyl-4,4'-diisocyanate, 2,2'-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, diethylene glycol diphenylether diisocyanate, 1,3-propylene glycol diphenylether diisocyanate, benzophenone diisocyanate, triisocyanatobenzene, 2,4,6-triisocyanatotoluene, trimethylbenzene triisocyanate, diphenylmethane-2,4,4'-triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene, 4-methyl-diphenylmethane-3,5,2',4',6'-pentaisocyanate or mixtures of at least two such diisocyanates.

Likewise suitable polyisocyanate components B) are also the polynuclear homologues of diisocyanatodiphenylmethane known as "polymer-MDI".

Particularly suitable polyisocyanate components B) are the polyisocyanates having urethane and/or isocyanurate structures obtainable from monomeric 2,4- and/or 2,6-TDI by reaction with polyols and/or oligomerization, preferably trimerization, which are obtainable by any known methods, described for example in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A1 378 529, EP-A 1 378 530, EP-A 2 174 967, JP 63260915 or JP 56059828 or are mixtures of at least two such polyisocyanates.

Finally, suitable polyisocyanate components B) are also those bearing both aromatic and aliphatic isocyanate groups, for example the mixed trimers or allophonates of 2,4- and/or 2,6-TDI with HDI described in DE-A 1 670 667, EP-A 0 078 991, EP-A 0 696 606 and EP-A 0 807 623.

To produce the polyisocyanate mixtures according to the invention, polyisocyanate components B) based on 2,4- and/or 2,6-TDI having urethane and/or isocyanurate structure are preferably used, which comprise a monomeric diisocyanates content of less than 1.5% by weight, preferably less than 1.0% by weight, particularly preferably less than 0.5% by weight, based on the solids content of the polyisocyanate. The residual monomer contents are measured according to DIN EN ISO 10283:2007-11 by gas chromatography with an internal standard.

Particularly preferred polyisocyanate components B) for producing the polyisocyanate mixtures according to the invention are TDI polyisocyanates comprising urethane groups of the type mentioned, particularly low-monomer reaction products of 2,4- and/or 2,6-TDI with 1,1,1-trimethylolpropane (TMP) and optionally further preferably low molecular weight alcohols such as diethylene glycol.

The polyisocyanate components B) used in the production of the polyisocyanate mixtures according to the invention are preferably in hydrophobic form. However, it is certainly also possible optionally to modify the polyisocyanate components B) hydrophilically, for example by the method described above in the production of the polyisocyanate components A), by reacting with organic compounds having sulfonic acid and/or sulfonate groups D) that are reactive to isocyanate groups and/or the non-ionic hydrophilic polyether alcohols specified as compound E). The sulfonic acids D) bearing at least one group that is reactive to isocyanate groups are used in this case, if at all, in such amounts that the resulting polyisocyanate components B) comprise from 0.60 to 2.00% by weight, preferably 0.80 to 1.80% by weight, particularly preferably 1.00 to 1.60% by weight, of sulfonate groups (calculated as SO₃; molar weight = 80 g/mol) in chemically bound form. Non-ionic hydrophilic compounds E) can be used in this case, if at all, in amounts to an extent of up to 30% by weight, preferably up to 25% by weight, particularly preferably up to 20% by weight, based on the polyisocyanate component B).

To improve compatibility, the polyisocyanate components B) can optionally also be modified by reaction with aliphatic alcohols or fatty acid ester alcohols, as described above as hydrophobic compounds E) in the production of the polyisocyanate components A). Such hydrophobic compounds E) are used in this case, if at all, in amounts to an extent of up to 30% by weight, preferably up to 20% by weight, particularly preferably up to 10% by weight, based on the polyisocyanate components B).

To produce the polyisocyanate mixtures according to the invention, the polyisocyanate component A) comprising sulfonate groups and the polyisocyanate component B) are mixed and homogenized at temperatures of preferably 20 to 200°C, particularly preferably 30 to 160°C, especially preferably at 35 to 120°C with the aid of suitable mixing apparatuses, wherein the ratios are selected such that the proportion of the polyisocyanate component B) is 7 to 43% by weight, preferably 10 to 40% by weight, more preferably 15 to 35% by weight and most particularly preferably 20 to 30% by weight of the total amount of the components A) and B).

The polyisocyanate components A) and B) can be mixed solvent-free. Preferably before, during or after the actual mixing, suitable organic solvents that are inert to the reactive groups of the starting components, especially to the isocyanate groups, are added to the polyisocyanate components A) and/or B), especially to the polyisocyanate component B). Examples of suitable solvents are the customary paint solvents which are known per se, such as, for example, ethyl acetate, butyl acetate, ethylene glycol monomethyl or monoethyl ether acetate, 1-methoxy-2-propyl acetate (MPA), 3-methoxy-n-butyl acetate, acetone, 2-butanone, 4-methyl-2-pentanone, cyclohexanone, toluene, xylene, chlorobenzene, white spirit, relatively highly substituted aromatics, of the kind commercialized, for example, under the names solvent naphtha, Solvesso®, Isopar®, Nappar® (Deutsche EXXON CHEMICAL GmbH, Cologne, DE) and Shellsol® (Deutsche Shell Chemie GmbH, Eschborn, DE), carbonic esters such as dimethyl carbonate, diethyl carbonate, 1,2-ethylene carbonate and 1,2-propylene carbonate, lactones such as β-propiolactone, γ-butyrolactone, ε-caprolactone and ε-methylcaprolactone, and also solvents such as propylene glycol diacetate, diethylene glycol dimethyl ether, dipropylene glycol dimethyl ether, butyl glycol acetate, butyl diglycol acetate, 1,3-dioxolane, N-methylpyrrolidone and N-methylcaprolactam, or mixtures of at least two such solvents.

In the production of the polyisocyanate mixtures according to the invention, organic solvents are used, if at all, in such amounts that the resulting method products preferably have a solids content (non-volatile fractions) of 40 to 95% by weight, particularly preferably 50 to 90% by weight, especially preferably 60 to 85% by weight.

The method products according to the invention are polyisocyanate mixtures comprising sulfonate groups, optionally dissolved in organic solvent, which can be readily converted to preferably sedimentation-stable dispersions, without using high shear forces, by merely stirring into water.

Optionally, prior to the emulsification, any further non-hydrophilized polyisocyanates are added to the polyisocyanate mixtures according to the invention, for example those of the type specified as suitable polyisocyanates C) and/or as polyisocyanate component B), whereby polyisocyanate mixtures are obtained which, provided that the specifications made above with respect to the content of sulfonate groups and the proportion of polyisocyanate components having araliphatically and/or aromatically bonded isocyanate groups are observed, are also polyisocyanate mixtures according to the invention since these generally consist of mixtures of
(i) polyisocyanate mixtures modified hydrophilically with sulfonate groups in accordance with the invention and
(ii) unmodified polyisocyanates of the type mentioned by way of example.

In such mixtures, the polyisocyanate components A) comprising sulfonate groups present in the polyisocyanate mixtures according to the invention take on the function of an emulsifier for the non-hydrophilic polyisocyanates that are subsequently mixed in.

The polyisocyanate mixtures according to the invention represent valuable starting materials for the production of polyurethane plastics by the isocyanate polyaddition process.

For this purpose, the polyisocyanate mixtures are preferably used in the form of aqueous emulsions which can be reacted in combination with polyhydroxyl compounds dispersed in water in the context of aqueous two-component systems.

The polyisocyanate mixtures comprising sulfonate groups according to the invention are particularly preferably used as crosslinkers for paint binders or paint binder components, dissolved or dispersed in water, that have groups reactive to isocyanate groups, especially alcoholic hydroxyl groups, in the production of coatings using aqueous coating compositions based on such binders or binder components. The crosslinker, optionally in emulsified form, can be combined with the binders or binder components here by simple stirring by any methods prior to processing the coating compositions or even by using two-component spray guns.

Paint binders or paint binder components which may be mentioned in this context include: polyacrylates comprising hydroxyl groups, dissolved or dispersed in water, especially those of the molecular weight range 1000 to 20 000, which are valuable two-component binders with organic polyisocyanates as crosslinkers, or optionally urethane-modified polyester resins comprising hydroxyl groups, dispersed in water, of the type known from polyester and alkyd resin chemistry. In principle, suitable as reaction partners for the polyisocyanate mixtures according to the invention are any binders, dissolved or dispersed in water, comprising groups that are reactive to isocyanates. These also include, for example, polyurethanes or polyureas dispersed in water, which can be crosslinked with polyisocyanates due to the active hydrogen atoms present in the urethane or urea groups.

The present invention further provides a coating composition comprising at least one polyisocyanate mixture according to the invention.

In the case of use according to the invention as crosslinker component for aqueous paint binders, the polyisocyanate mixtures comprising sulfonate groups according to the invention are generally used in such amounts that correspond to an equivalents ratio of NCO groups to groups that are reactive to NCO groups, especially alcoholic hydroxyl groups, from 0.5:1 to 2:1.

The polyisocyanate mixtures according to the invention may optionally be admixed in minor amounts, however, with non-functional aqueous paint binders, for the purpose of achieving very specific properties, as an additive for improving adhesion, for example.

The polyisocyanate mixtures according to the invention can of course also be used in a form in which they are blocked with blocking agents known per se from polyurethane chemistry, in combination with the aforementioned aqueous paint binders or paint binder components, as aqueous one-component PUR baking systems. Suitable blocking agents are, for example, diethyl malonate, ethyl acetoacetate, acetone oxime, butanone oxime, ε-caprolactam, 3,5-dimethylpyrazole, 1,2,4-triazole, dimethyl-1,2,4-triazole, imidazole or mixtures of at least two of these blocking agents.

Substrates contemplated for the aqueous coatings formulated using the inventive polyisocyanate mixtures comprising sulfonate groups include any desired substrates, such as, for example, metal, wood, glass, stone, ceramic materials, concrete, rigid and flexible plastics, textiles, leather, and paper, which prior to coating may optionally also be provided with customary primers. A preferred field of application for the polyisocyanate mixtures comprising sulfonate groups according to the invention are aqueous two-component varnishes for varnishing wood and furniture.

In general, the aqueous coating compositions formulated with the polyisocyanate mixtures according to the invention, into which compositions, optionally, the auxiliaries and additives customary in the coatings sector may be incorporated, examples being flow control assistants, dyes, colour pigments, fillers, matting agents or emulsifiers, especially so-called external emulsifiers that are unreactive to isocyanate groups, as described for example in EP-A 0 486 881 and WO 97/31960 , have technical coatings properties that are good even in the case of room-temperature dryings.

Of course, they may alternatively be dried under forced conditions at elevated temperature or by baking at temperatures up to 260°C.

The present invention further provides a substrate coated with a coating composition according to the invention optionally cured by the action of heat.

As crosslinker component in aqueous coating compositions, the polyisocyanate mixtures according to the invention offer the advantage of a distinctly more rapid drying, at similarly long practical pot life, compared to the polyisocyanates comprising sulfonate groups known to date from the prior art. Due to their excellent water emulsifiability, which enables a homogeneous, particularly finely divided distribution in aqueous paint binders, they provide coatings with excellent optical properties, in particular high surface gloss, flow and high transparency, and even also enable a blister-free application in greater layer thicknesses than is possible with commercially available pure aliphatic polyisocyanate crosslinkers.

The coating compositions according to the invention exhibit surprisingly rapid drying even at room temperature, such that they are recommended especially for use in the wood and furniture industries, where properties such as short cycle times and as rapid sandability as possible are desirable.

In addition to the preferred use as crosslinker components for aqueous 2K-PUR coatings, the polyisocyanate mixtures comprising sulfonate groups according to the invention are outstandingly suitable as crosslinkers for aqueous dispersion adhesives, leather and textile coatings or textile printing pastes, as AOX-free paper auxiliaries or even as additives for mineral building materials, for example concrete or mortar.

The features specified as preferred for the polyisocyanate mixture according to the invention are also preferred for the further subject matters of the invention.

The examples which follow serve to illustrate the present invention, but should in no way be understood as imposing any restriction on the scope of protection.

### Examples

All percentages are based on weight unless otherwise noted.

The NCO contents were determined by titrimetry in accordance with DIN EN ISO 11909:2007-05.

All viscosity measurements were taken with a Physica MCR 51 rheometer from Anton Paar Germany GmbH (DE) according to DIN EN ISO 3219:1994-10 at a shear rate of 250 s⁻¹.

The residual monomer contents were measured according to DIN EN ISO 10283:2007-11 by gas chromatography with an internal standard.

Water contents were determined by volumetric titration by Karl Fischer in accordance with DIN 53715 (created based on DIN 51777 Part 1 (1973 edition)) using a Titrando 841 automatic titration unit from Methrom. The measurement range of this method is from 0.01 to 99% by weight.

The gloss of the coatings obtained was measured by reflectometry in accordance with DIN EN ISO 2813:2015-02 at the 60° and 20° angle. The higher the measurement value, the higher the gloss.

The haze was measured in accordance with DIN EN ISO 13803:2015-02 at the 20° angle. The lower the haze value, the more free of cloudiness is the coating.

The pendulum damping according to König was determined in accordance with DIN EN ISO 1522; 2007-04 on glass plates.

The drying properties of the coating systems were determined in accordance with DIN 53 150:2002-09.

The maximum blister-free layer thickness (degree of blistering) was determined in accordance with DIN EN ISO 4628-2:2016-07.

The resistance to chemicals was determined by the method described in DIN EN 12720:2014-02 using coffee, red wine, water, mustard and ethanol as test liquids.

### Starting compounds

### Polyisocyanates C)

### Polyisocyanate C1

HDI polyisocyanate comprising isocyanurate groups, produced by catalytic trimerization of HDI based on Example 11 of EP-A 330 966, with the modification that the reaction was stopped by addition of dibutyl phosphate at an NCO content of the crude mixture of 40%. Subsequently, unconverted HDI was removed by thin-film distillation at a temperature of 130°C and a pressure of 0.2 mbar.

| | |
|---|---|
| NCO content: | 21.7% |
| NCO functionality: | 3.4 |
| Monomeric HDI: | 0.1% |
| Viscosity (23°C): | 3080 mPas |
| Colour number (Hazen): | 18 |

### Polvisocvanate C2

PDI polyisocyanate comprising isocyanurate groups, produced by catalytic trimerization of PDI by the method described in WO 2016/146579 for the polyisocyanate component A2). The reaction was deactivated at an NCO content of the crude mixture of 36.7% by addition of an equimolar amount of dibutyl phosphate, based on the amount of catalyst used, and further stirring for 30 minutes at 80°C. Subsequently, unconverted PDI was removed by thin-film distillation at a temperature of 140°C and a pressure of 0.5 mbar.

| | |
|---|---|
| NCO content: | 21.8% |
| NCO functionality: | 3.5 |
| Monomeric PDI: | 0.09% |
| Viscosity (23°C): | 9850 mPas |
| Colour number (Hazen): | 34 |

### Aminosulfonic acids D)

3-(Cyclohexylamino)propanesulfonic acid (Sigma-Aldrich Chemie Gmbh, Munich, DE) was used as aminosulfonic acid, which had a water content of 0.4% after 3 hours' drying under vacuum (100°C / ca. 0.5 mbar).

### Polyisocyanate component A1)

943.9 g (4.88 val) of the isocyanurate group-containing starting polyisocyanate C1) were stirred together with 36.0 g (0.16 val) of 3-(cyclohexylamino)propanesulfonic acid (CAPS), 20.1 g (0.16 mol) of dimethylcyclohexylamine and 0.05 g (50 ppm) of 2,6-di-tert-butyl-4-methylphenol under dry nitrogen at 100°C for 4:00 hours until a substantially clear polyisocyanate mixture comprising sulfonate groups prevailed. After cooling to room temperature and filtration over a T 5500 filter layer (Seitz), the following characteristic data were determined:

| | |
|---|---|
| NCO content: | 19.8% |
| NCO functionality: | 3.3 |
| Viscosity (23°C): | 8210 mPas |
| Colour number (Hazen): | 18 |
| Sulfonate group content: | 1.30% (calculated as SO₃; molar weight % = 80 g/mol) |

### Polvisocvanate component A2)

960.7 g (4.92 val) of the isocyanurate group-containing starting polyisocyanate C1) were stirred together with 25.0 g (0.11 val) of 3-(cyclohexylamino)propanesulfonic acid (CAPS), 14.3 g (0.11 mol) of dimethylcyclohexylamine and 0.05 g (50 ppm) of 2,6-di-tert-butyl-4-methylphenol under dry nitrogen at 100°C for 3:30 hours until a substantially clear polyisocyanate mixture comprising sulfonate groups prevailed. After cooling to room temperature and filtration over a T 5500 filter layer (Seitz), the following characteristic data were determined:

| | |
|---|---|
| NCO content: | 20.2% |
| NCO functionality: | 3.3 |
| Viscosity (23°C): | 4050 mPas |
| Colour number (Hazen): | 18 |
| Sulfonate group content: | 0.90% (calculated as SO₃; molar weight % = 80 g/mol) |

### Polvisocvanate component A3)

965.3 g (4.99 val) of the isocyanurate group-containing starting polyisocyanate C1) were stirred together with 22.1 g (0.10 val) of 3-(cyclohexylamino)propanesulfonic acid (CAPS), 12.6 g (0.10 mol) of dimethylcyclohexylamine and 0.05 g (50 ppm) of 2,6-di-tert-butyl-4-methylphenol under dry nitrogen at 100°C for 3:30 hours until a substantially clear polyisocyanate mixture comprising sulfonate groups prevailed. After cooling to room temperature and filtration over a T 5500 filter layer (Seitz), the following characteristic data were determined:

| | |
|---|---|
| NCO content: | 20.5% |
| NCO functionality: | 3.3 |
| Viscosity (23°C): | 3740 mPas |
| Colour number (Hazen): | 20 |
| Sulfonate group content: | 0.80% (calculated as SO₃; molar weight % = 80 g/mol) |

### Polvisocvanate component A4)

937.2 g (4.86 val) of the isocyanurate group-containing starting polyisocyanate C2) were stirred together with 40.0 g (0.18 val) of 3-(cyclohexylamino)propanesulfonic acid (CAPS), 22.8 g (0.18 mol) of dimethylcyclohexylamine, 0.05 g (50 ppm) of 2,6-di-tert-butyl-4-methylphenol and 250 g of MPA under dry nitrogen at 100°C for 3:15 hours until a substantially clear polyisocyanate mixture comprising sulfonate groups prevailed. After cooling to room temperature and filtration over a T 5500 filter layer (Seitz), the following characteristic data were determined:

| | |
|---|---|
| NCO content: | 15.7% |
| NCO functionality: | 3.4 |
| Solids content: | 80% |
| Viscosity (23°C): | 3420 mPas |
| Colour number (Hazen): | 17 |
| Sulfonate group content: | 1.45% (calculated as SO₃; molar weight % = 80 g/mol, on solids) |

### Polyisocyanate component B1)

Urethane group-containing TDI polyisocyanate, produced based on Example 4 of EP-A 0 546 399, with the modification that a mixture of 80% 2,4-TDI and 20% 2,6-TDI is used and the resulting pale yellow resin is dissolved at 60% strength in 1-methoxy-2-propyl acetate (MPA).

| | |
|---|---|
| NCO content: | 10.6% |
| NCO functionality: | 3.3 |
| Monomeric 2,4-TDI: | 0.13% |
| Monomeric 2,6-TDI: | 0.14% |
| Viscosity (23°C): | 370 mPas |
| Colour number (Hazen): | 34 |

### Examples 1 to 10 (inventive and comparative)

The polyisocyanate components A1), A2) and A3) were mixed with polyisocyanate component B1) at 30°C in varying ratios and homogenized by stirring for 30 minutes. The solids content of the polyisocyanate mixtures was subsequently adjusted with MPA to 70% in each case.

Table 1 below shows the respective compositions and characteristic data of the polyisocyanate mixtures obtained.

### Examples 11 to 20 (inventive and comparative)

100 parts by weight of a commercial aqueous hydroxy-functional polyacrylate dispersion having a solids content of 40% and an OH content of 3.0%, based on resin solids, obtainable under the name Bayhydrol A 2651 (Covestro AG, Leverkusen), were mixed with 2.6 parts by weight of a commercial non-ionic wetting agent (Surfynol AD01, Evonik Materials Netherlands BV, Utrecht), 0.16 parts by weight of a commercial flow control additive (TEGO Flow 425, Evonik Resource Efficiency GmbH, Essen) and 0.16 parts by weight of a commercial thickener (OPTIFLO-TVS VF, BYK-Chemie GmbH, Wesel). To this clearcoat material were added the polyisocyanate mixtures of Examples 1 to 10, in each case in the amounts specified in Table 2 (in each case corresponding to an equivalent ratio of isocyanate groups to alcoholic hydroxyl groups of 1.5: 1) and the mixture was homogenized by stirring at 1000 rpm for 5 minutes. The solids contents of the clearcoats were then adjusted to 45% by addition of water.

For comparison, using the identical method, a clearcoat was likewise produced from 100 parts by weight of Bayhydrol A 2651 and 32.12 parts by weight of the polyisocyanate component A1) in MPA or 32.4 parts by weight of a 70% solution of the polyisocyanate component A4) (in each case corresponding to an equivalent ratio of isocyanate groups to alcoholic hydroxyl groups of 1.5: 1).

The coatings were applied with the aid of a film drawing frame in a wet film layer thickness of 200 µm (ca. 90 µm dry) on glass plates and black plexiglass sheets and were dried in each case at room temperature (ca. 25°C) and 50% relative air humidity. Table 2 shows paint-related properties of the coatings obtained.

The processing time of the application-ready mixtures was > 6 hours in all cases.

**Table 1:**

| Example | | 1 Comparative | 2 | 3 | 4 | 5 | 6 Comparative | 7 | 8 Comparative | 9 | 10 |
|---|---|---|---|---|---|---|---|---|---|---|---|
| | | | | | | | | | | | |
| Polyisocyanate component A1) | | 664.7 | 630.1 | 559.8 | 489.9 | 420.0 | 385.0 | - | - | 525.0 | - |
| Polyisocyanate component A2) | | - | - | - | - | - | - | 630.1 | - | - | - |
| Polyisocyanate component A3) | | - | - | - | - | - | - | - | 630.1 | - | - |
| Polyisocyanate component A4) | | - | - | - | - | - | - | - | - | - | 743.9 |
| Polyisocyanate component B1) | | 58.9 | 116.4 | 233.6 | 350.2 | 466.7 | 525.0 | 116.4 | 116.4 | 291.7 | 174.9 |
| MPA | | 276.4 | 253.4 | 206.6 | 159.9 | 113.3 | 90.0 | 253.4 | 253.4 | 183.3 | 81.2 |
| | | | | | | | | | | | |
| NCO content | [%] | 13.8 | 13.7 | 13.6 | 13.4 | 13.3 | 13.2 | 14.0 | 14.1 | 13.5 | 13.5 |
| Viscosity (23°C): | [mPas] | 115 | 125 | 222 | 261 | 326 | 342 | 193 | 188 | 256 | 305 |
| Solids content | [%] | 70 | 70 | 70 | 70 | 70 | 70 | 70 | 70 | 70 | 70 |
| | | | | | | | | | | | |
| SO₃; content in A1)^{a)} | r% 1 | 1.30 | 1.30 | 1.30 | 1.30 | 1.30 | 1.30 | 0.90 | 0.80 | 1.30 | 1.45 |
| Proportion of B1) ^{b)} | [%] | 5.0 | 10.0 | 20.0 | 30.0 | 40.0 | 45.0 | 10.0 | 10.0 | 25.0 | 15.0 |

| | | | | | | | | | | | |
|---|---|---|---|---|---|---|---|---|---|---|---|
| ^{a)}calculated as SO₃; molar weight = 80 g/mol (on solids) ^{b)} based on the total amount of the components A1) and B1), (in each case solid/solid) | | | | | | | | | | | |

**Table 2:**

| Example | | | 11 Comparative | 12 Comparative | 13 | 14 | 15 | 16 | 17 Comparative |
|---|---|---|---|---|---|---|---|---|---|
| | | | | | | | | | |
| Polyisocyanate component A1) | | [parts by weight] ^{a), b)} | 32.12 | - | - | - | - | - | - |
| Polyisocyanate mixture from example 1 | | [parts by weight] ^{a)} | - | 32.30 | - | - | - | - | - |
| Polyisocyanate mixture from example 2 | | [parts by weight] ^{a)} | - | - | 32.47 | - | - | - | - |
| Polyisocyanate mixture from example 3 | | [parts by weight] ^{a)} | - | - | - | 32.83 | - | - | - |
| Polyisocyanate mixture from example 4 | | [parts by weight] ^{a)} | - | - | - | - | 33.19 | - | - |
| Polyisocyanate mixture from example 5 | | [parts by weight] ^{a)} | - | - | - | - | - | 33.50 | - |
| Polyisocyanate mixture from example 6 | | [parts by weight] ^{a)} | - | - | - | - | - | - | 33.75 |
| Gloss at 20°/60°C | | | 86/92 | 85/90 | 85/90 | 85/91 | 83/90 | 84/91 | 19/54 |
| Haze | | | 8 | 7 | 7 | 11 | 12 | 33 | 303 |
| Drying ^{c)} | T1 | [min at 23°C] | 53 | 53 | 52 | 52 | 50 | 48 | 48 |
| | T4 | [min at 23°C] | 360 | 344 | 276 | 260 | 249 | 216 | 224 |
| Pendulum hardness ^{d)} [s] | | after 3 h /23°C | 10 | 21 | 35 | 34 | 40 | 48 | 16 |
| | | after 6 h /23°C | 51 | 44 | 51 | 65 | 61 | 61 | 21 |
| | | after 1 d /23°C | 76 | 58 | 63 | 85 | 79 | 71 | 34 |
| | | after 7 d /23°C | 91 | 81 | 80 | 95 | 91 | 88 | 61 |

| Example | | | 18 | 19 Comparative | 20 | 21 | 22 Comparative | | |
|---|---|---|---|---|---|---|---|---|---|
| | | | | | | | | | |
| Polyisocyanate mixture from example 7 | | [parts by weight] ^{a)} | 31.8 | - | - | - | - | | |
| Polyisocyanate mixture from example 8 | | [parts by weight] ^{a)} | - | 31.6 | - | - | - | | |
| Polyisocyanate mixture from example 9 | | [parts by weight] ^{a)} | - | - | 33.0 | - | - | | |
| Polyisocyanate mixture from example 10 | | [parts by weight] ^{a)} | - | - | - | 33.0 | - | | |
| Polyisocyanate component A4) | | [parts by weight] ^{a), b)} | - | - | - | - | 32.4 | | |
| Gloss at 20°/60°C | | | 79/88 | 59/81 | 84/90 | 83/90 | 85/90 | | |
| Haze | | | 23 | 167 | 10 | 13 | 9 | | |
| Drying ^{c)} | T1 | [min at 23°C] | 54 | 51 | 53 | 56 | 55 | | |
| | T4 | [min at 23°C] | 265 | 272 | 230 | 255 | 383 | | |
| Pendulum hardness ^{d)} [s] | | after 3 h /23°C | 27 | 25 | 37 | 32 | 18 | | |
| | | after 6 h /23°C | 50 | 48 | 64 | 64 | 54 | | |
| | | after 1 d /23°C | 65 | 62 | 79 | 80 | 76 | | |
| | | after 7 d /23°C | 84 | 81 | 92 | 91 | 95 | | |

| | | | | | | | | | |
|---|---|---|---|---|---|---|---|---|---|
| ^{a)} based on 100 parts by weight of Bayhydrol A 2651 ^{b)} as 70% solution in MPA ^{c)} determination of drying in accordance with DIN EN ISO 9117-5:2012-11 ^{d)} König pendulum hardness (DIN 53157), measured on RT-dried coating films | | | | | | | | | |

The examples 13 to 16 and 20 show that the use of the polyisocyanate mixtures according to the invention from Examples 2 to 5 and 9 in combination with the aqueous binder give shiny, clear practically turbidity-free coating films which, compared to the crosslinked coatings with the pure aliphatic polyisocyanate A1) (Example 11) and with the polyisocyanate mixture of Example 1, which comprises only 5% by weight of aromatic polyisocyanate (Example 12), have the advantage of a distinctly more rapid drying (T4) at unchanged long pot life of > 6 hours. Comparative Example 17 shows that the polyisocyanate mixture having a proportion of 45% by weight of aromatic polyisocyanate B1) is incompatible with the aqueous binder dispersion and gives a highly cloudy coating film recognizable by the low gloss.

The comparison of examples 18 and 19 demonstrates that in order to achieve clear, turbidity-free coating films, a certain minimum amount of sulfonate groups in polyisocyanate component A) is required.

Example 21 and comparative Example 22 show the advantage of the more rapid drying of the polyisocyanate mixtures according to the invention by the example of an isocyanurate-containing PDI polyisocyanate.

### Examples 23 and 24 (comparative)

To determine the maximum blister-free layer thickness, the clearcoat from Example 20 and comparative Example 11 was applied to black plexiglass sheets with the aid of a step gap film applicator and in each case dried at room temperature (ca. 25°C) and 55% relative air humidity. The following table shows the degrees of blistering evaluated visually in accordance with DIN EN ISO 4628-2:2016-07 (0 = best grade; 5 = worst grade) for various layer thicknesses applied.

**Table 3:**

| Example | 23 | | | | | 24 Comparative | | | | |
|---|---|---|---|---|---|---|---|---|---|---|
| Clearcoat from Example | 20 | | | | | 11 | | | | |
| Layer thickness applied [µm] | 200 | 250 | 300 | 400 | 500 | 200 | 250 | 300 | 400 | 500 |
| Amount of blistering | 0 | 0 | 0 | 2 | 2.5 | 0 | 0 | 1 | 4 | 4.5 |
| Blister size | 0 | 0 | 0 | 2 | 2 | 0 | 0 | 1 | 2 | 2 |

The comparison shows that the coating film (Example 20) crosslinked with the polyisocyanate mixture according to the invention from Example 9, despite its proportion of aromatic isocyanate groups that are highly reactive to water, at an application layer thickness of 300 µm, still dries completely blister-free, and even at higher application thicknesses shows a distinctly lower blister formation than the coating from Example 11 crosslinked with the pure aliphatic polyisocyanate component A1).

### Example 25 and 26 (inventive and comparative)

100 parts by weight of a commercial aqueous hydroxy-functional polyacrylate dispersion having a solids content of 40% and an OH content of 3.0%, based on resin solids, obtainable under the name Bayhydrol A 2651 (Covestro AG, Leverkusen), were mixed with 2.8 parts by weight of a commercial non-ionic wetting agent (Surfynol AD01, Evonik Materials Netherlands BV, Utrecht), 38.2 parts by weight of a commercial aqueous white pigment dispersion (White Aquamac 6, Proquimac PFC, S.A., Barcelona, Spain), 2.0 parts by weight of a commercial thickener (OPTIFLO-TVS VF, BYK-Chemie GmbH, Wesel) and 29.8 parts by weight deionized water, to give a white coating. To this stock mixture were added 37.4 parts by weight of the polyisocyanate mixture from Example 9 (corresponding to an equivalent ratio of isocyanate groups to alcoholic hydroxyl groups of 1.7: 1) and the mixture was homogenized by stirring at 1000 rpm for 5 minutes.

For comparison, using the identical method, a white coating was produced from 100 parts by weight of Bayhydrol A 2651 and 36.3 parts by weight of a 70% solution of the polyisocyanate component A1) in MPA (corresponding to an equivalent ratio of isocyanate groups to alcoholic hydroxyl groups of 1.7: 1).

The coatings were applied with the aid of a film drawing frame in a wet film layer thickness of 200 µm (ca. 90 µm dry) on glass plates and were dried in each case at 50°C for 16 hours. After a further 24 hours at 23°C, the white coatings thus obtained were tested for chemical resistance in accordance with DIN EN 12720:2014-02. Table 4 below shows the test results after various testing periods.

**Table 4:**

| Example | | | 25 | 26 Comparative |
|---|---|---|---|---|
| | | Test time | | |
| Resistance ^{a)} to | Coffee | 6 h | 5 | 5 |
| | | 16 h | 5 | 5 |
| | Red wine | 6 h | 5 | 5 |
| | | 16 h | 5 | 5 |
| | Water | 6 h | 5 | 5 |
| | | 16 h | 5 | 5 |
| | Mustard | 6 h | 5 | 5 |
| | | 16 h | 5 | 5 |
| | Ethanol ^{b)} | 1 h | 4.5 | 4.5 |

| | | | | |
|---|---|---|---|---|
| ^{a)} method in accordance with DIN EN 12720:2014-02, evaluation 0 to 5 (0 = worst, 5 = best grade) ^{b)} as 48% aqueous solution | | | | |

The examples show that the coating film (Example 25) crosslinked with the inventive polyisocyanate mixture from Example 9 has as good resistance to household chemicals as the coating crosslinked with the pure aliphatic polyisocyanate component A1).

## Claims

1. Polyisocyanate mixture comprising a polyisocyanate component A) having aliphatically and/or cycloaliphatically bonded isocyanate groups and a polyisocyanate component B) having araliphatically and/or aromatically bonded isocyanate groups, **characterized in that** the polyisocyanate component A) comprises at least 0.85% by weight of sulfonate groups (calculated as SO₃; molar weight = 80 g/mol) in chemically bonded form and the proportion of the polyisocyanate component B) is 7 to 43% by weight of the total amount of the components A) and B).

2. Polyisocyanate mixture according to Claim 1, **characterized in that** the polyisocyanate component A) is a reaction product of at least one aliphatic and/or cycloaliphatic polyisocyanate C) with at least one organic compound D) bearing at least one group that is reactive to isocyanate groups and which comprises one or more sulfonic acid and/or sulfonate groups, and optionally at least one non-ionic hydrophilic or hydrophobic compound E) comprising at least one group that is reactive to isocyanate groups, which has been prepared optionally in the presence of further auxiliaries and additives F).

3. Polyisocyanate mixture according to Claim 2, **characterized in that** the polyisocyanate C) is any diisocyanates and/or polyisocyanates having aliphatically and/or cycloaliphatically bonded isocyanate groups.

4. Polyisocyanate mixture according to Claim 2 or 3, **characterized in that** the polyisocyanate C) is those based on PDI, HDI, IPDI and/or 4,4'-diisocyanatodicyclohexylmethane, preferably PDI and/or HDI.

5. Polyisocyanate mixture according to any of Claims 2 to 4, **characterized in that** the organic compound D) is a hydroxy-, mercapto- and/or amino-functional sulfonic acid and/or salt thereof.

6. Polyisocyanate mixture according to any of Claims 2 to 5, **characterized in that** the organic compound D) is an amino-functional sulfonic acid of the general formula (III) and/or salt thereof, 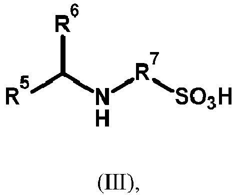 wherein in formula (III) R⁵ and R⁶ are each independently identical or different radicals and are hydrogen or saturated or unsaturated, linear or branched, aliphatic or cycloaliphatic or aromatic organic radicals having 1 to 18 carbon atoms, which are substituted or unsubstituted and/or comprise heteroatoms in the chain, wherein R⁵ and R⁶, in combination with each other and optionally one further nitrogen atom or one oxygen atom, may form cycloaliphatic or heterocyclic rings having 3 to 8 carbon atoms, which may optionally be further substituted, and R⁷ is a linear or branched aliphatic radical having 2 to 6 carbon atoms.

7. Polyisocyanate mixture according to any of Claims 2 to 6, **characterized in that** the organic compound D) is 2-isopropylaminoethane-1-sulfonic acid, 3-isopropylaminopropane-1-sulfonic acid, 4-isopropylaminobutane-1-sulfonic acid, 2-cyclohexylaminoethane-1-sulfonic acid, 3-cyclohexylaminopropane-1-sulfonic acid and/or 4-cyclohexylaminobutane-1-sulfonic acid and/or salts thereof.

8. Polyisocyanate mixture according to any of Claims 2 to 7, **characterized in that** the organic compound D) is present to an extent of at least 20 mol% in the form of sulfonate groups neutralized with N,N-dimethylbutylamine, N,N-diethylmethylamine, N,N-diisopropylethylamine, N,N-dimethylcyclohexylamine, N-methylpiperidine, N-ethylmorpholine.

9. Polyisocyanate mixture according to any of Claims 2 to 8, **characterized in that** the non-ionic hydrophilic or hydrophobic organic compound E) is pure polyethylene oxide polyether alcohols and/or mixed polyalkylene oxide polyether alcohols, the alkylene oxide units of which consist of ethylene oxide units to an extent of at least 70 mol%, and/or aliphatic alcohols or fatty acid ester alcohols which comprise in each case at least 8 carbon atoms.

10. Polyisocyanate mixture according to any of Claims 1 to 9, **characterized in that** the polyisocyanate component A) comprises at least 0.90% by weight, preferably 0.95% by weight, more preferably 1.00 to 3.00% by weight and most preferably 1.10 to 1.80% by weight of sulfonate groups (calculated as SO₃; molar weight = 80 g/mol) in chemically bonded form.

11. Polyisocyanate mixture according to any of Claims 1 to 10, **characterized in that** the polyisocyanate component B) is polyisocyanates having urethane and/or isocyanate structure obtainable from monomeric 2,4- and/or 2,6-TDI by reaction with polyols and/or oligomerization.

12. Polyisocyanate mixture according to any of Claims 1 to 11, **characterized in that** the proportion of the polyisocyanate component B) is 10 to 40% by weight, preferably 15 to 35% by weight and most preferably 20 to 30% by weight, of the total amount of the components A) and B).

13. Use of at least one polyisocyanate mixture according to any Claims 1 to 12 as starting components in the production of polyurethane plastics.

14. Coating composition comprising at least one polyisocyanate mixture according to any of Claims 1 to 12.

15. Substrate, coated with a coating composition according to Claim 14 optionally cured by the action of heat.
